# EUROPÄISCHE PATENTSCHRIFT

(11) **EP 0 870 933 B1**
(45) Veröffentlichungstag und Bekanntmachung des Hinweises auf die Patenterteilung: **20.11.2002**
(21) Anmeldenummer: 98105516.3
(22) Anmeldetag: 26.03.1998
(51) Int. Cl.: F16B 1/00

(54) **Verfahren und Vorrichtung zum Herstellen einer Verbindung zwischen zwei Bauteilen**
Method and device for manufacturing a connection between two elements
Dispositif et procédé pour réaliser une connection entre deux éléments

(30) Priorität: 07.04.1997 DE 19714242
(43) Veröffentlichungstag der Anmeldung: 14.10.1998
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, 31515 Wunstorf (DE)
(74) Vertreter: Jabbusch, Wolfgang, Dipl,-Ing., Dr.

(56) Entgegenhaltungen:
- FR-A- 2 189 488
- FR-A- 2 540 212
- FR-A- 2 542 829
- FR-A- 2 633 233
- US-A- 4 250 596

## Beschreibung

Die Erfindung betrifft ein Verfahren und eine Vorrichtung zum Herstellen einer Verbindung zwischen zwei Bauteilen.

Übliche Verfahren zum Verbinden von Teilen umfassen die Gruppe der lösbaren Verbindungen und die Gruppe der unlösbaren Verbindungen. Beispielsweise in der Kraftfahrzeugindustrie werden lösbare Verbindungen eingesetzt, um Zierleisten oder Dichtungsleisten einerseits schnell mit der Fahrzeugkarosserie verbinden zu können und andererseits bei Reparaturen oder Lackarbeiten von der Karosserie schnell abnehmen zu können.

Die US-A-4250596 offenbart z.B. In Fig. 3 ein Verfahren gemäß dem Oberbegriff des Anspruchs 1, wobei gemäß Fig 8 eine aushärtbare Vergußmasse als Kleber verwendet wird. Die Verbindungsteile sind nicht streifen- bzw. strangförmig ausgebildet.

Der Erfindung liegt die Aufgabe zugrunde, ein Verfahren aufzufinden, mit dem eine lösbare Verbindung schnell und kostengünstig hergestellt werden kann.

In Lösung dieser Aufgabe ist ein Verfahren gemäß dem Anspruch 1 gefunden worden.

Gemäß dem Erfindungsgedanken ist das Verfahren im Wesentlichen so ausgestaltet, daß das Verbindungsteil mehrere von außen gegen das erste Bauteil hindurch verlaufende Formschluß-Durchbrechungen aufweist, wobei in die Durchbrechungen eine Vergußmasse eingefüllt wird, derart, daß sie einerseits an dem Kleber anliegt und andererseits die Durchbrechungen außen abdeckt

Ein erfindungsgemäßer Verbindungsteil gemäß Anspruch 3 für die Verfahrensweisen nach der Erfindung ist im Querschnitt T-förmig ausgebildet, weist und somit beidseitig vorstehende Haltevorsprünge zur Aufnahme des zweiten Bauteils auf, wobei es längs seiner Mittellinie einen nach oben offenen, oberen Kanal, einen nach unten offenen, unteren Kanal aufweist und wobei die Kanäle durch in Abständen angeordnete Durchbrüche miteinander verbunden sind. Ein solches Verbindungsteil kann als extrudiertes Kunststoff- oder Metallprofil ausgebildet sein. Das Verbindungsteil kann auch rund, beispielsweise knopfartig, oder oval ausgebildet sein. Die Ausbildung mit einem oberen und einem unteren Kanal, die miteinander verbunden sind, stellt eine optimale Formschluß-Ausbildung für das Ausgießen mit der Vergußmasse dar.

Nach einer anderen Weiterbildung der Erfindung ist das Verbindungsteil gemäß Anspruch 4 als Metallstreifen mit beidseitigen Haltevorsprüngen ausgebildet, wobei der Metallstreifen beidseitig zur Mittellängslinie parallellaufende Stege aufweist, die zu beiden Seiten des Metallstreifens vorstehen und wobei im Metallstreifen zwischen den Stegen Durchbrüche zum Hindurchtreten der Vergußmasse vorgesehen sind.

Zur Positionierung auf dem freien Rand eines Bauteil-Flansches kann ein erfindungsgemäßer Verbindungsteil gemäß Anspruch 5 auch zwei von seinem Kopfteil abwärts verlaufende, den Rand zwischen sich einschließende Schenkel aufweisen, die einen um den Rand herumlaufenden unteren Kanal ausbilden, wobei das Kopfteil des Verbindungsteils an der Oberseite einen oberen Kanal aufweist und zwischen den Kanälen wiederum Durchbrüche zum Hindurchtreten der Vergußmasse angeordnet sind. Bei dieser Verbindungstechnik ergibt sich der weitere Vorteil, daß die freien Falzkanten eines aus zwei aneinanderliegenden Blechen abgewinkelten Flansches durch die Vergußmasse so versiegelt sind, daß bei Stahlblechen keine Rostbildung eintritt.

Nach einer Weiterbildung der Erfindung wird bei industrieller Anwendung das Verbindungsteil in eine Haltevorrichtung gemäß Anspruch 6 eingelegt und von der Haltevorrichtung gegen den mit einem Kleber versehenen Verbindungsbereich gedrückt und nach dem Eingeben der Vergußmasse so lange gehalten, bis die Vergußmasse ausgehärtet ist. Eine entsprechend ausgebildete Vorrichtung zur Durchführung dieser Verfahrensweise vereinfacht das Ausführen der Verbindungen.

Ausführungsbeispiele der Erfindung, aus denen sich weitere erfinderische Merkmale ergeben, sind in der Zeichnung dargestellt. Es zeigen:
- Fig. 1: eine erste Ausführung der erfindungsgemäßen Verbindung in Querschnitt-Darstellung,
- Fig. 2: eine verkleinerte Draufsicht auf die Darstellung gemäß Fig. 1,
- Fig. 3: einen Schnitt längs der Linie A-A in Fig. 2,
- Fig. 4: einen Schnitt längs der Linie B-B in Fig. 3,
- Fig. 5: einen Querschnitt durch eine Haltevorrichtung mit eingelegtem Verbindungsteil,
- Fig. 6: das Einspritzen der Vergußmasse bei der Verfahrensweise nach Fig. 5,
- Fig. 7: eine Draufsicht auf die Haltevorrichtung gemäß Fig. 5 und 6,
- Fig. 8: bis 11 die Verwendung einer abgewandelten Haltevorrichtung,
- Fig. 12: einen Querschnitt durch die Verbindung eines Dichtungsprofils mit Hilfe eines Verbindungsteils mit einem Bauteil,
- Fig. 13: einen Querschnitt durch die Verbindung eines Dichtungsprofils mit Hilfe eines Verbindungsteils mit einem Flanschteil,
- Fig. 14: die Draufsicht auf ein aus flexiblem Metall gefertigtes Verbindungsteil,
- Fig. 15: einen Schnitt längs der Linie C-C in Fig. 14,
- Fig. 16: bis 20 schematisch das Aufklippen eines elastischen Randes eines Bauteils auf einen Seitenrand des Verbindungsteils gemäß dem AusführungsBeispiel nach Fig. 1 bis 4 und 12,
- Fig. 21: das Herstellen eines Verbindungsteils aus Vergußmasse an einem Bauteil,
- Fig. 22: ein Anwendungsbeispiel für das Verbindungsteil gemäß Fig. 21,
- Fig. 23: das Herstellen eines Verbindungsteils aus Vergußmasse an einem Bauteil-Flansch und
- Fig. 24: ein Anwendungsbeispiel für das Verbindungsteil gemäß Fig. 23.

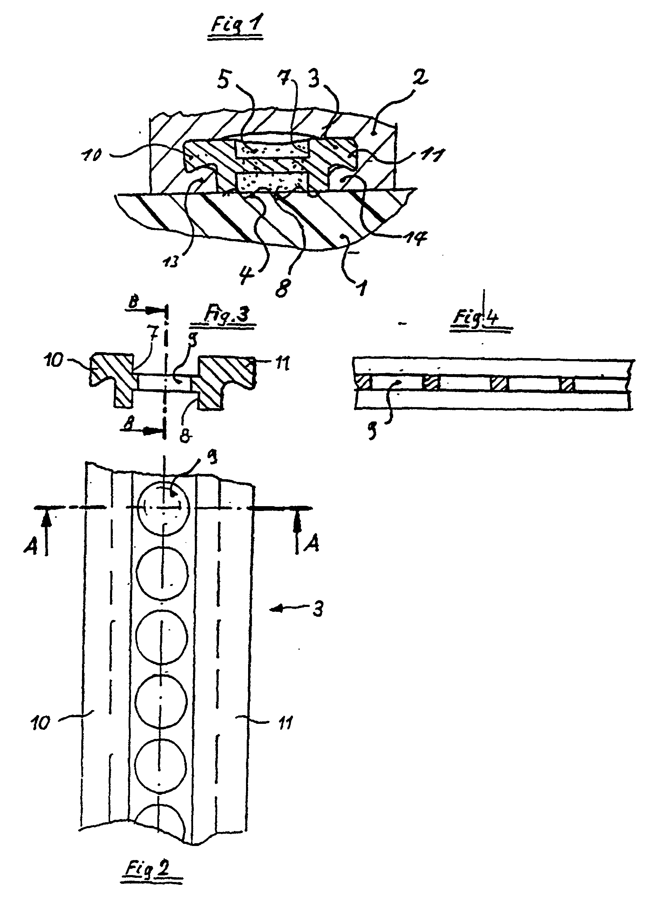

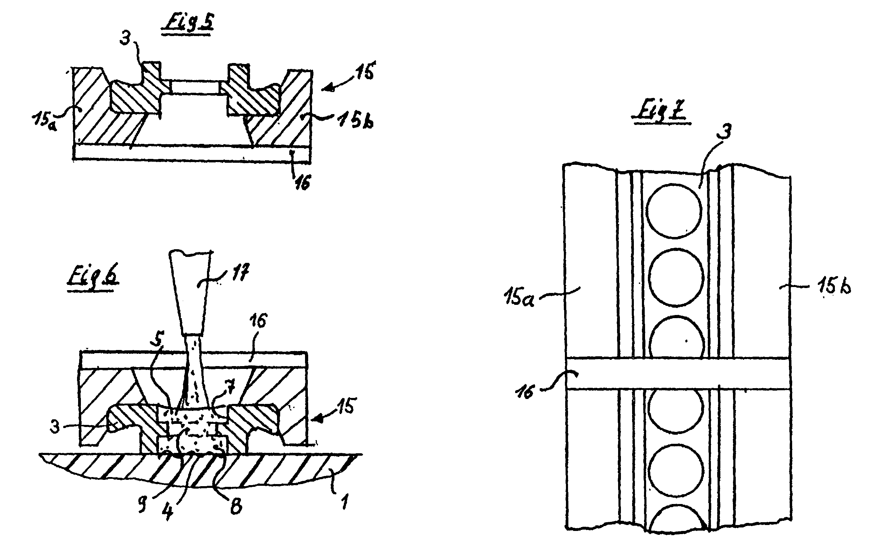

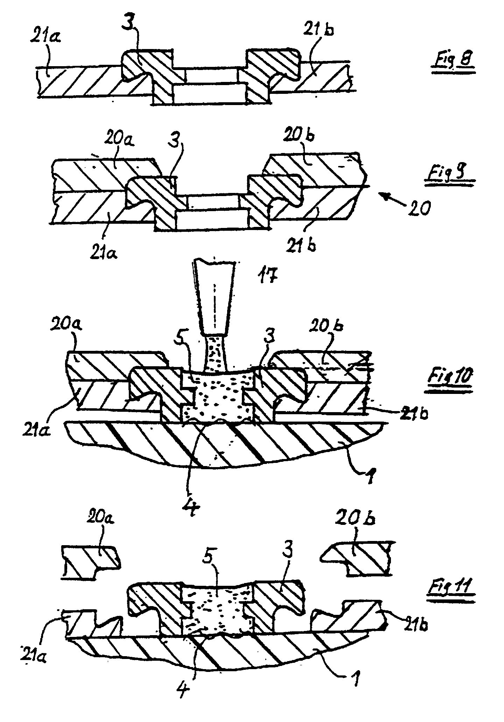

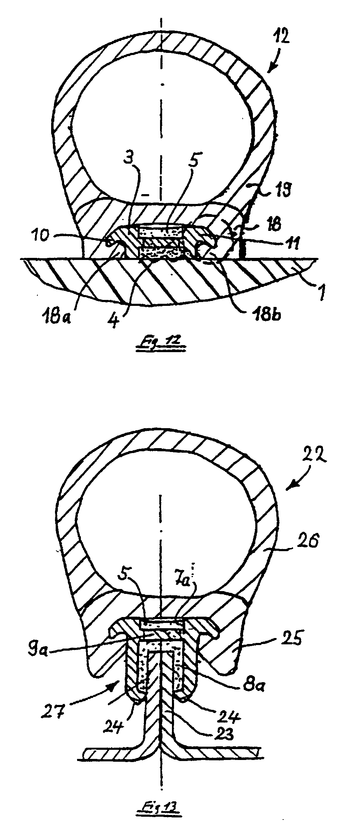

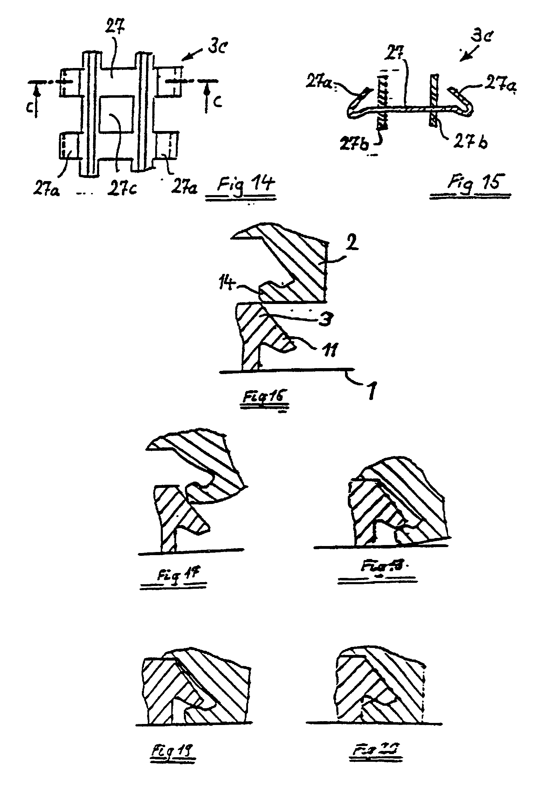

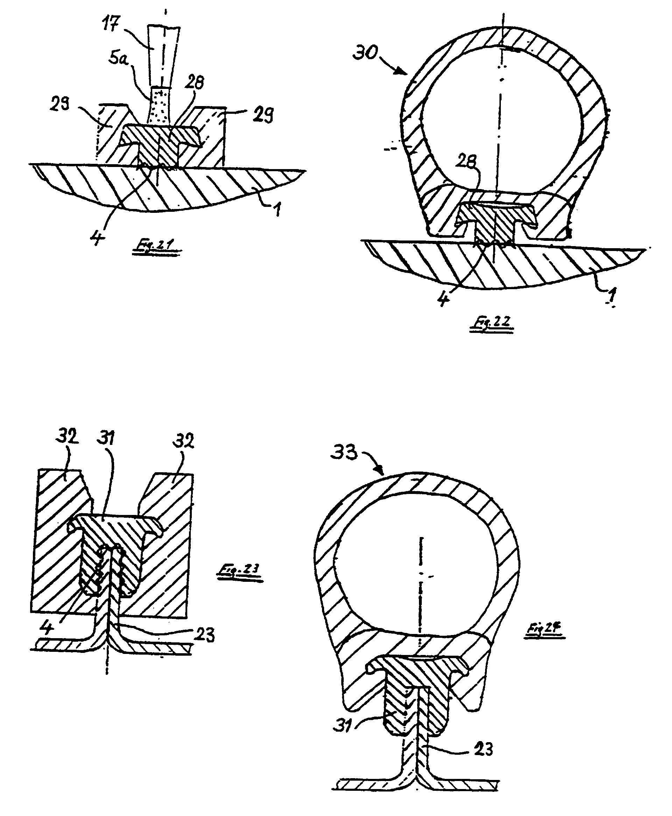

Die Figuren 1 bis 4 zeigen ein erstes prinzipielles Ausführungsbeispiel des erfindungsgemäßen Verfahrens, mit dem ein Bauteil 2 mit einem Bauteil 1 verbunden wird. Dabei erfolgt die Verbindung der beiden Bauteile mit Hilfe eines Verbindungsteils 3. Im Bereich des auf dem Bauteil 1 anzuordnenden Verbindungsteils 3 wird das Bauteil 1 zunächst mit einem Kleber 4 bestrichen. Auf die derart vorbereitete Fläche des Bauteil 1 wird ein Verbindungsteil 3 aufgesetzt, das als ein Strangprofil mit etwa T-förmigem Querschnitt ausgebildet ist, das somit beidseitig vorstehende Haltevorsprünge 10 und 11 aufweist. Dabei ist das Verbindungsteil 3 im Ausführungsbeispiel aus Kunststoff gefertigt. Das Verbindungsteil 3 hat im Bereich seiner Längsmittellinie einen oberen Kanal 7, der über in Abständen voneinander angeordnete kreisförmige Öffnungen 9 mit einem parallel verlaufenden unteren Kanal 8 in Verbindung steht. In den oberen Kanal 7 wird eine Vergußmasse 5 eingegeben, die durch die Öffnungen 9 in den unteren Kanal 8 des Verbindungsteils 3 gelangt, und sich dort mit dem Kleber 4 und somit mit dem Bauteil 1 verbindet. Im Ergebnis sind dann der untere Kanal 8, die Öffnungen 9 und der obere Kanal 7 mit der Vergußmasse 5 ausgefüllt.

Als Vergußmasse 5 kann zum Beispiel ein Zweikomponentenmaterial verwendet werden. Die beiden Komponenten werden dann direkt vor dem Einfüllen gemischt. Über eine chemische Reaktion wird der feste Zustand erreicht. Es sind aber auch einkomponentige Systeme, die thermisch reagieren, einsetzbar. Nachdem die Vergußmasse 5 einen festen Zustand erreicht hat, ist zwischen der mit dem Bauteil 1 verbundenen Vergußmasse 5 und dem Verbindungsteil 3 ein Formschluß entstanden, der das Verbindungsteil 3 am Bauteil 1 sicher festhält.

Anschließend wird das Bauteil 2, das beim Ausführungsbeispiel gleichfalls als ein Strangprofil ausgebildet ist, auf das Verbindungsteil 3 aufgeklippt. Dazu weist das Bauteil 2 an den beiden Längsseiten Halteorgane 13,14 auf, die über die Haltevorsprünge 10,11 des Verbindungsteils 3 hinweggedrückt werden und danach unter die Haltevorsprünge 10,11 einrasten. Wie dieses Aufklippen und Einrasten der Haltevorsprünge des Bauteils 2 abläuft, zeigen die Figuren 16 bis 20 in halbseitiger Darstellung.

Die Figuren 5 bis 7 zeigen eine abgewandelte Verfahrensweise, wie sie industriell angewendet werden kann. Hier wird das Verbindungsteil 3 zunächst um 180° gedreht in eine Haltevorrichtung 15 eingelegt, die aus zwei in einem Abstand zueinander parallel verlaufenden Strangprofilen 15a,15b gebildet ist, welche durch in Abständen voneinander angeordnete Verbindungsleisten 16 miteinander verbunden sind.

Anschließend wird die Haltevorrichtung 15 mit dem eingebetteten Verbindungsteil 3 um 180° gedreht und auf die mit einem Kleber 4 vorbereitete Verbindungsfläche des Bauteils 1 zubewegt, bis das Verbindungsteil 3 auf das Bauteil 1 aufsetzt. Im nächsten Schritt wird mittels einer Düse 17 die Vergußmasse 5 in den oberen Kanal 7 und über die Durchbrüche 9 in den unteren Kanal 8 des Verbindungsteils 3 eingefüllt, solange, bis die beiden Kanäle und die Durchbrüche mit der Vergußmasse 5 ausgefüllt sind. Nach dem Abbinden des Klebers 4 und dem Abbinden der Vergußmasse 5 wird die Haltevorrichtung 15 abgehoben und kann auf das Verbindungsteil ein Bauteil aufgeklippt werden.

Die Figuren 8 bis 11 zeigen die Verwendung einer abgewandelten Haltevorrichtung 20 für das Verbindungsteil 3, die hier auf jeder Seite zweiteilig ausgebildet ist. Jedes seitliche Profil der Haltevorrichtung 20 hat einen oberen Teil 20a und 20b und einen unteren Teil 21a und 21b. Wie insbesondere Figur 11 zeigt, sind die Seitenteile 20a,20b und 21a,21b jeweils selbständig auf das etwa T-förmige Verbindungsteil 3 zubewegbar und von diesem entfernbar. Damit entfällt das Erfordernis, die Haltevorrichtung nach dem Einlegen des Verbindungsteils 3 in die Haltevorrichtung um 180° schwenken zu müssen, wie bei der Verfahrensweise nach den Figuren 5 bis 7 erforderlich. Mit dieser weitergebildeten Ausführung der Haltevorrichtung wird das Verfahren prinzipiell in gleicher Weise ausgeführt, wie zuvor bei den Figuren 5 bis 7 beschrieben.

Fig. 12 zeigt die Befestigung eines extrudierten Dichtungsprofils auf einem Bauteil 1 nach dem erfindungsgemäßen Verfahren unter Verwendung eines etwa T-förmigen Verbindungsteils 3. Das Verbindungsteil 3 ist in der vorbeschriebenen Verfahrensweise auf dem Bauteil 1 befestigt worden. Das Dichtungsprofil hat einen Gummifuß 18 und einen darauf angeordneten weichen Moosgummischlauch 19. Der Gummifuß 18 hat Haltevorsprünge 18a und 18b, welche nach dem Aufkippen die seitlichen Haltevorsprünge 10,11 des Verbindungsteils 3 hintergreifen.

Fig. 13 zeigt eine weiterentwickelte Verfahrensweise nach der Erfindung zur Befestigung eines Dichtungsprofils 22 auf dem freien Rand eines Flansches 23 eines nicht weiter dargestellten Bauteils. Auf den freien Rand des Flanschabschnittes 23 wird ein extrudiertes Verbindungsteil 27 aufgesetzt, das zwei abwärts gerichtete, parallel zueinander verlaufende Schenkel 24 hat, die den freien Rand des Flanschabschnittes 23 zwischen sich einschließen und sich dabei mit ihren unteren gegen den Flanschabschnitt 23 vorstehenden Rändern dichtend an den Flanschabschnitt 23 anlegen. Dabei verbleibt zwischen den Schenkeln 24 und dem Flanschabschnitt 23 ein Hohlraum, der einen unteren Kanal 8a des Verbindungsteils 27 bildet. Über in dem Kopf des Verbindungsteils 27 angeordnete Durchbrüche 9a besteht eine Verbindung von dem unteren Kanal 8a zu einem oberen Kanal 7a. Nachdem der freie Rand des Flanschabschnittes 23 mit Kleber 4 bestrichen worden ist, wird das Verbindungsteil 27 auf den Flanschabschnitt 23 aufgeschoben und wird anschließend Vergußmasse 5 in den oberen Kanal 7a, in die Durchbrüche 9a und in den unteren Kanal 8a eingegeben. Nach dem Abbinden von Kleber 4 und Vergußmasse 5 wird das Dichtungsprofil 22, das hier gleichfalls aus einem Gummifuß 25 und einem daraufgesetzten Moosgummischlauch 26 besteht, auf das Verbindungsteil 27 wie vorbeschrieben aufgeklippt.

Die Figuren 14 und 15 zeigen ein aus einem Blechstreifen 27 aus Federstahl gefertigtes Verbindungsteil 3c. Der Blechstreifen 27 hat seitliche Haltevorsprünge 27a zum Aufklippen eines zweiten Bauteils. Rechtwinklig zum Blechstreifen 27 weist dieser zwei zueinander parallel laufende, beidseitig vorstehende Stege 27b auf, mit deren unteren Enden das Verbindungsteil auf das eine Bauteil aufgesetzt wird, und auf deren obere Enden sich das andere Bauteil beim Aufklippen aufsetzt. Zugleich bilden die unteren Enden der Stege 27b einen unteren Kanal aus und die oberen Enden der Stege 27b einen oberen Kanal aus. Im Blechstreifen 27 befinden sich Durchbrüche 27c, durch welche die Vergußmasse von dem oberen Kanal in den unteren Kanal gelangen kann.

Die Figuren 16 bis 20 zeigen schematisch das Aufklippen eines elastischen Randes eines der vorbeschriebenen zweiten Bauteile auf den rechten Haltevorsprung des Verbindungsteils 3. Mit 1 ist das erste Bauteil angedeutet.

Die Figuren 21 und 22 zeigen eine weitere Ausbildung des erfindungsgemäßen Verfahrens. Bei dieser Weiterbildung wird das Verbindungsteil 28 selbst im Verbindungsbereich hergestellt. Dies geschieht in der Weise, daß zunächst das Bauteil 1 wiederum mit einem Kleber 4 bestrichen wird und daß dann Formteile 29 auf dem Bauteil 1 positioniert werden, derart, daß diese gemeinsam in ihrem Mittenbereich eine Gießform ausbilden, in die mittels einer Düse 17 die Vergußmasse 5a eingegeben wird. Damit wird ein wiederum strangförmiges und im Querschnitt T-förmiges Verbindungsteil 28 hergestellt, das nach dem Gießen abbindet und über den Kleber 4 mit dem Bauteil 1 fest verbunden ist. Nach dem Abbinden werden die Formteile 29 entfernt und kann auf das Verbindungsteil 28 beispielsweise ein Dichtungsprofil 30 aufgeklippt werden, wie in Figur 22 dargestellt.

Die Figuren 23 und 24 zeigen eine ähnliche Weiterbildung des erfindungsgemäßen Verfahrens, bei dem das auf einen Flanschabschnitt 23 zu positionierende Verbindungsteil 31 gleichfalls vor Ort hergestellt wird. Wie in Fig. 23 abgebildet, werden hier wiederum Formteile 32 rechts und links vom Flanschabschnitt 23 positioniert und wird die Vergußmasse in die so gebildete Form eingefüllt, nachdem der Flanschabschnitt 23 in dem Verbindungsbereich mit einem Kleber 4 bestrichen worden ist. Nach dem Abbinden von Kleber 4 und Vergußmasse 5 werden die Formteile 32 entfernt. Fig. 24 zeigt beispielsweise, wie ein Dichtungsprofil 33 auf das Verbindungsteil 31 aufgeklippt wird.

## Patentansprüche

1. Verfahren zum Herstellen einer Verbindung zwischen zwei Bauteilen (1, 2), bei dem auf ein erstes Bauteil (1) ein Verbindungsteil (3) geklebt wird und ein zweites Bauteil (2) auf das Verbindungsteil (3) aufgebracht, vorzugsweise aufgeklippt wird,
**dadurch gekennzeichnet,**
**daß** auf das erste Bauteil (1) im Verbindungsbereich ein Kleber (4) aufgetragen wird, daß das Verbindungsteil (3) streifen- bzw. strangförmig ausgebildet ist und mehrere von außen gegen das erste Bauteil (1) hindurch verlaufende Formschluß-Durchbrechungen (9) aufweist, in die eine Vergußmasse (5) eingefüllt wird, derart, daß sie einerseits an dem Kleber (4) anliegt und andererseits die Durchbrechungen (9) außen abdeckt, und daß das Aufbringen der zweiten Bauteils (2) auf das Verbindungsteil (3) nach dem Aushärten der Vergußmasse (5) erfolgt.

2. Verfahren nach Anspruch 1, **dadurch gekennzeichnet, daß** das Verbindungsteil (3) in eine Haltevorrichtung (15) eingelegt wird, daß das Verbindungsteil (3) von der Haltevorrichtung (15) gegen den mit einem Kleber (4) versehenen Verbindungsbereich gedrückt und nach dem Eingeben der Vergußmasse (5) solange gehalten wird, bis die Vergußmasse (5) ausgehärtet ist.

3. Verbindungsteil für ein Verfahren nach Anspruch 1 oder 2, **dadurch gekennzeichnet, daß** es streifen- bzw. strangförmig und im Querschnitt T-förmig ausgebildet ist und somit beidseitig vorstehende Haltevorsprünge (10, 11) aufweist und daß es längs seiner Mittellinie einen nach oben offenen, oberen Kanal (7) und einen nach unten offenen, unteren Kanal (8) aufweist, wobei die Kanäle durch in Abständen angeordnete Durchbrüche (9) miteinander verbunden sind.

4. Verbindungsteil für ein Verfahren nach Anspruch 1 oder 2, **dadurch gekennzeichnet, daß** es als Metallstreifen (27) mit beidseitigen Haltevorsprüngen (27a) ausgebildet ist, daß es zwei beidseitig zur Mittellängslinie des Metallstreifens parallellaufende Stege (27b) aufweist, die zu beiden Seiten des Metallstreifens (27) vorstehen, und daß der Metallstreifen zwischen den Stegen (27b) Durchbrüche (27c) aufweist.

5. Verbindungsteil für ein Verfahren nach Anspruch 1 oder 2, **dadurch gekennzeichnet, daß** es streifen- oder strangförmig ausgebildet ist und zur Positionierung auf dem freien Rand eines Bauteil-Flansches (23) zwei von seinem Kopfteil abwärts verlaufende, den Rand zwischen sich einschließende Schenkel (24) aufweist, die einen um den Rand herumlaufenden unteren Kanal (8a) ausbilden, daß der Kopfteil an der Oberseite einen oberen Kanal (7a) aufweist, und daß zwischen den Kanälen (7a, 8a) Durchbrüche (9a) angeordnet sind.

6. Haltevorrichtung zur Durchführung des Verfahrens nach Anspruch 2, **dadurch gekennzeichnet, daß** die Haltevorrichtung (15) zwei parallel zueinander verlaufende, der Formgebung des Verbindungsteils (3) angepaßte Strangprofile (15a, 15b) aufweist.

7. Haltevorrichtung nach Anspruch 6, **dadurch gekennzeichnet, daß** die Haltevorrichtung (15) zur Anpassung an die Formgebung des Verbindungsteils (3) beidseitig wenigstens zweigeteilt ist.

## Claims

1. Method of producing a connection between two components (1, 2) in which a connecting part (3) is adhesively bonded to a first component (1), and a second component (2) is fitted, preferably clipped, to the connecting part (3), **characterized in that** an adhesive (4) is applied to the first component (1) in the connection area, **in that** the connecting part (3) is of strip-like or strand-like design and has a plurality of form-fitting apertures (9) running through from the outside towards the first component (1) and into which a casting compound (5) is put in such a way that, on one side, it rests on the adhesive (4) and, on the other side, covers the apertures (9) on the outside, and **in that** the fitting of the second component (2) to the connecting part (3) is carried out after the casting compound (5) has hardened.

2. Method according to Claim 1, **characterized in that** the connecting part (3) is inserted into a holding device (15), **in that** the connecting part (3) is pressed by the holding device (15) against the connection area provided with an adhesive (4) and, after the casting compound (5) has been put in, is held until the casting compound (5) has hardened.

3. Connecting part for a method according to Claim 1 or 2, **characterized in that** it is of strip-like or strand-like design and has a T-shaped cross section and therefore has holding projections (10, 11) projecting on both sides, and **in that** along its centre line, it has an upper channel (7) that is open at the top and a lower channel (8) which is open at the bottom, the channels being connected to one another by apertures (9) arranged at intervals.

4. Connecting part for a method according to Claim 1 or 2, **characterized in that** it is designed as a metal strip (27) with holding projections (27a) on both sides, **in that** it has webs (27b) which run in parallel on both sides of the longitudinal centre line of the metal strip and which project on both sides of the metal strip (27), and **in that** the metal strip has apertures (27c) between the webs (27b).

5. Connecting part for a method according to Claim 1 or 2, **characterized in that** it is of strip-like or strand-like design and, for the purpose of positioning on the free edge of a component flange (23), has two legs (24) which run downward from its top part and enclose the edge between them and which form a lower channel (8a) that runs around the edge, **in that** the top part has an upper channel (7a) on the upper side, and **in that** apertures (9a) are arranged between the channels (7a, 8a).

6. Holding device for carrying out the method according to Claim 2, **characterized in that** the holding device (15) has two extruded profiles (15a, 15b) which run parallel to each other and match the shape of the connecting part (3).

7. Holding device according to Claim 6, **characterized in that** the holding device (15) is divided into at least two on both sides in order to match the shape of the connecting part (3).

## Revendications

1. Procédé pour réaliser une liaison entre deux composants (1, 2), dans lequel on colle un élément de liaison (3) sur un premier composant (1) et on place, de préférence on clipse, un deuxième composant (2) sur l'élément de liaison (3),
**caractérisé**
**en ce qu'**on applique une colle (4) sur le premier composant (1) dans la zone de liaison, en ce que l'élément de liaison (3) est réalisé en forme de bande ou de barre et présente plusieurs ajours (9) de liaison par complémentarité de forme qui s'étendent depuis l'extérieur à travers le premier composant (1), ajours dans lesquels est introduite une masse de scellement (5), de manière qu'elle s'applique d'une part contre la colle (4) et recouvre d'autre part les ajours (9) de l'extérieur, et en ce que la mise en place du deuxième composant (2) sur l'élément de liaison (3) s'effectue après durcissement de la masse de scellement (5).

2. Procédé selon la revendication 1, **caractérisé en ce qu'**on place l'élément de liaison (3) dans un dispositif de maintien (15), **en ce qu'**on presse l'élément de liaison (3) depuis l'élément de maintien (15) contre la zone de liaison pourvue d'une colle (4), et **en ce qu'**on le maintient, après introduction de la masse de scellement (5), jusqu'à ce que la masse de scellement (5) durcisse.

3. Elément de liaison pour un procédé selon la revendication 1 ou 2, **caractérisé en ce qu'**il est réalisé en forme de bande ou de barre et présente une section transversale en T et comporte ainsi des saillies de maintien (10, 11) qui dépassent des deux côtés et **en ce qu'**il présente, le long de sa ligne médiane, un canal supérieur (7), ouvert vers le haut, et un canal inférieur (8) ouvert vers le bas, les canaux étant reliés entre eux par des ajours (9) disposés à distance.

4. Elément de liaison pour un procédé selon la revendication 1 ou 2, **caractérisé en ce qu'**il est réalisé sous la forme d'une bande métallique (27) avec saillies de maintien (27a) des deux côtés, **en ce qu'**il comporte deux nervures (27b) s'étendant parallèlement des deux côtés de la ligne médiane longitudinale de la bande métallique, lesquelles font saillie des deux côtés de la bande métallique (27), et **en ce que** la bande métallique présente des ajours (27c) entre les nervures (27b).

5. Elément de liaison pour un procédé selon la revendication 1 ou 2, **caractérisé en ce qu'**il est réalisé sous la forme d'une bande ou d'une barre et comporte, pour le positionnement sur le bord libre d'une bride (23) du composant, deux branches (24) s'étendant vers le bas depuis sa partie de tête, enfermant entre elles le bord, lesquelles branches forment un canal inférieur (8a) passant autour du bord, **en ce que** la partie de tête présente, sur le côté supérieur, un canal supérieur (7a), et **en ce que** des ajours (9a) sont disposés entre les canaux (7a, 8a).

6. Dispositif de maintien pour la mise en oeuvre du procédé selon la revendication 2, **caractérisé en ce que** le dispositif de maintien (15) comporte deux profilés extrudés (15a, 15b) s'étendant parallèlement l'un à l'autre et adaptés à la forme donnée à l'élément de liaison (3).

7. Dispositif de maintien selon la revendication 6, **caractérisé en ce que** pour s'adapter à la forme donnée à l'élément de liaison (3), le dispositif de maintien (4) est au moins divisé en deux des deux côtés.
